# EUROPEAN PATENT SPECIFICATION

(11) **EP 1 517 030 B1**
(45) Date of publication and mention of the grant of the patent: **23.07.2008**
(21) Application number: 04019091.0
(22) Date of filing: 11.08.2004
(51) Int. Cl.: F02D 41/22, F02D 41/14, F02D 21/08, F02D 41/38

(54) **Method and apparatus for detecting deterioration in fuel injection amount of internal combustion engine**
Verfahren und Vorrichtung zum Feststellen der Verschlechterung der Einspritzmenge in einer Brennkraftmaschine
Méthode et dispositif pour détecter une détérioration de la quantité injectée dans un moteur à combustion

(30) Priority: 22.08.2003 JP 2003299066
(43) Date of publication of application: 23.03.2005
(73) Proprietor: Toyota Jidosha Kabushiki Kaisha, Toyota-shi, Aichi-ken, 471-8571 (JP)
(72) Inventor: Sugiyama, Tatsumasa, c/o Toyota Jidosha K.K., Aichi-ken, 471-8571 (JP); Ito, Yoshiyasu, c/o Toyota Jidosha K.K., Aichi-ken, 471-8571 (JP)
(74) Representative: Kuhnen & Wacker

(56) References cited:
- EP-A- 0 785 349
- EP-A- 0 791 736
- EP-A- 1 291 514
- US-A- 4 989 150
- US-A- 5 067 973
- US-A- 5 492 099
- US-A- 5 816 220

## Description

### BACKGROUND OF THE INVENTION

### 1. Field of Invention

The invention relates to a method of detecting deterioration in fuel injection amount of an internal combustion engine and an apparatus of detecting deterioration in a fuel injection amount.

### 2. Description of Related Art

A fuel injection valve that serves to inject a high pressure fuel into a combustion chamber of an internal combustion engine, for example, a diesel engine, will be deteriorated as passage of time. For example, wearing between the needle and the valve seat which proceeds with age may cause deviation of the actual fuel injection amount from the command value of the fuel injection amount. Such deviation prevents the internal combustion engine from providing a required combusting performance called "combustibility" hereinafter as well as causes combustion noise and problems related to exhaust emission.

There are publications, for example, Japanese Patent Application Laid-Open Publications No. 2003-56389 and No. 2002-89333 as described below disclosing the system that learns the aforementioned deviation in an idle state of the vehicle, that is, executes learning of deterioration in fuel injection amount in order to detect the deterioration and to set the correction value. The correction value is then reflected on the command value of the fuel injection amount so as to establish the required combustibility. The citation EP 0 785 349 analyses acceleration.

Another publication, for example, Japanese Patent Application Laid-Open Publications No. 3092569 as below discloses the system that performs a low temperature combustion where an exhaust recirculation amount is increased to be larger than that generated in the normal combustion state until a discharge amount of particulate matters (PM) reaches minimum.

It has been discovered that a problem occurs if the low temperature combustion is performed by the system as described above while detecting the deterioration in the fuel injection amount performed by another system as described above in the internal combustion engine. When the low temperature combustion is performed, the combustibility is likely to fluctuate owing to the cause other than the deterioration in the fuel injection amount even in the idle state. It is therefore difficult to distinguish the cause of the fluctuation in the combustibility between the deterioration in fuel injection amount and other factors. The resultant learned value is not accurate enough to be used for an appropriate combustion control.

The learning is performed during the normal combustion for the purpose of avoiding the aforementioned problem. However, the low temperature combustion is intended to reduce the PM, maintain the bed temperature of the exhaust emission control catalyst, or improve fuel efficiency in the idle state. The combustion mode other than the low temperature combustion is rarely performed in the idle state. It is clear that the aforementioned learning of the deterioration fails to provide sufficient results.

In the internal combustion engine under a recovery reclamation control where the fuel is added from a fuel addition valve in an exhaust system or after injection is performed from a fuel injection valve, the problem of fluctuation in the combustibility tends to occur during the learning even if a large amount of exhaust gas is not recirculated as in the case of the low temperature combustion. The fuel addition or after injection is not considered as giving an influence on the combustibility of the internal combustion engine. However, the fuel as a part of those supplied through the fuel addition or after injection may be introduced into the combustion chamber of the internal combustion engine through the exhaust gas recirculation process, resulting in fluctuation in the combustibility. The method performed to overcome the aforementioned problem may also prevent sufficient learning of the deterioration.

### SUMMARY OF THE INVENTION

It is an object of the invention to make sure an accurate detection of deterioration in fuel injection amount by preventing fluctuation of the combustibility irrespective of few chances of avoiding the cause of the fluctuation other than the deviation of the actual fuel injection amount from the command value thereof.

According to an aspect of the invention, a method of detecting deterioration in amount of fuel injected from a fuel injection valve of an internal combustion engine on the basis of a correlation between a fuel injection amount command value and combusting performance of the internal combusting engine, in particular its speed includes a step of inhibiting an operation control for the internal combustion engine which causes the correlation to fluctuate when the deterioration in the amount of the fuel is being detected.

In the aspect of the invention, execution of the operation control for the internal combustion engine which may cause fluctuation in the correlation is inhibited upon detection of the deterioration in fuel injection amount. This makes it possible to eliminate factors that cause the fluctuation other than the deviation of the fuel injection amount. Accordingly, the accurate detection of deterioration in fuel injection amount can be executed irrespective of few chances of avoiding such factors.

According to another aspect of the invention, an apparatus of detecting deterioration in a fuel injection amount in an internal combustion engine includes injection deterioration detection means for detecting deterioration in the amount of the fuel injected from a fuel injection valve on the basis of a correlation between a fuel injection amount command value and combusting performance of the internal combusting engine, in particular its speed; and inhibition means for inhibiting an operation control for the internal combustion engine which causes the correlation to fluctuate when the deterioration in the amount of the fuel is being detected by the injection deterioration detection means.

The inhibition means serves to inhibit the operation control for the internal combustion engine that may cause fluctuation in the correlation upon detection of deterioration in fuel injection amount performed by the injection deterioration detection means. This makes it possible to eliminate the factor that causes fluctuation in the combustibility other than the deviation of the fuel injection amount. It is possible to accurately detect deterioration in the fuel injection amount irrespective of few chances of avoiding the factor other than the deviation of the fuel injection amount.

In the aspect of the invention, when the internal combustion engine includes an exhaust gas recirculation mechanism that executes an exhaust gas recirculation control for adjusting an exhaust gas recirculation amount in accordance with an operation state of the internal combustion engine, the operation control for the internal combustion engine to be inhibited by the inhibition means is an operation control executed by the exhaust gas recirculation mechanism that recirculates unburned gas from an exhaust system of the internal combustion engine.

The operation control for the internal combustion engine which causes fluctuation in the correlation may include the process performed by the exhaust gas recirculation mechanism in which the unburned gas is recirculated from the exhaust system of the internal combustion engine. The inhibition means inhibits the operation control for the internal combustion engine that may cause recirculation of the unburned gas from the exhaust system. As a result, the factor that causes fluctuation in combustibility other than the deviation of the fuel injection amount can be effectively eliminated. Therefore, it is possible to accurately detect deterioration in the fuel injection amount irrespective of few chances of avoiding the factor other than the deviation of the fuel injection amount.

In the aspect of the invention, when the internal combustion engine includes recovery reclamation control means for executing one of addition of the fuel from a fuel addition valve in the exhaust system and an after injection from a fuel injection valve to an exhaust emission control catalyst in the exhaust system of the internal combustion engine, the operation control for the internal combustion engine in which the exhaust gas recirculation mechanism recirculates the unburned gas from the exhaust system of the internal combustion engine comprises one of the addition of the fuel and the after injection upon exhaust gas recirculation.

The operation control for the internal combustion engine under which the unburned gas is recirculated from the exhaust system therein by the exhaust gas recirculation mechanism includes the fuel addition or the after injection performed during the exhaust gas recirculation. The inhibition means inhibits the fuel addition or the after injection during the exhaust gas recirculation so as to effectively eliminate the factor that causes fluctuation in the combustibility other than the error of the fuel injection amount. It is possible to accurately detect deterioration in the fuel injection amount irrespective of few chances of avoiding the factor other than the deviation of the fuel injection amount.

In the aspect of the invention, when the internal combustion engine includes combustion mode control means for selectively executing a low temperature combustion and a normal combustion by adjusting an amount of the exhaust gas recirculation in accordance with the operation state of the internal combustion engine, the operation control for the internal combustion engine in which the exhaust gas recirculation mechanism recirculates the unburned gas from the exhaust system of the internal combustion engine comprises execution of the low temperature combustion by the combustion mode control means.

The operation control for the internal combustion engine under which the unburned gas is recirculated from the exhaust system therein by the exhaust gas recirculation mechanism may include execution of the low temperature combustion by the combustion mode control means. The inhibition means inhibits the exhaust gas recirculation in which a large amount of exhaust gas is recirculated, that is, the low temperature combustion so as to effectively eliminate the factor that causes fluctuation in the combustibility other than the deviation of the fuel injection amount. It is possible to accurately detect deterioration in the fuel injection amount irrespective of few chances of avoiding the factor other than the deviation of the fuel injection amount.

In the aspect of the invention, the inhibition means sets a continuation permission time for inhibiting the low temperature combustion and releases the inhibition of the low temperature combustion upon an elapse of the continuation permission time, and the injection deterioration detection means terminates detection of the deterioration in the fuel injection amount upon the elapse of the continuation permission time.

In the case where the deterioration in the fuel injection amount is detected, the continuation permission time allows a temporary inhibition of the low temperature combustion without elongating the time taken for inhibiting the low temperature combustion. As a result, it is possible to accurately detect the deterioration in the fuel injection amount without diminishing those effects from reducing the PM, maintaining the bed temperature of the catalyst, improving the fuel efficiency and the like.

In the aspect of the invention, the internal combustion engine includes an air conditioner to be driven based on an output of the internal combustion engine, and the inhibition means inhibits both the low temperature combustion and drive of the air conditioner.

Under the normal combustion mode while inhibiting the low temperature combustion, if the air conditioner is in the driven state, its load is likely to fluctuate depending on condition of air, and the load exerted to the internal combustion engine becomes instable. Accordingly the inhibition means inhibits drive of the air conditioner as well as the low temperature combustion so as to effectively eliminate the fluctuation in combustibility reflected in the engine speed caused by the factor other than the deviation of the fuel injection amount. It is possible to accurately detect deterioration in the fuel injection amount.

In the aspect of the invention, the inhibition means sets a continuation permission time for inhibiting the low temperature combustion and releases the inhibition of the low temperature combustion and the drive of the air conditioner upon an elapse of the continuation permission time, and the injection deterioration detection means terminates detection of the deterioration in the fuel injection amount upon the elapse of the continuation permission time.

The continuation permission time allows the low temperature combustion and drive of the air conditioner to be performed temporarily upon detection of deterioration in the fuel injection amount. The resultant time taken for the inhibiting operation does not have to be elongated. It is possible to accurately detect deterioration in fuel injection amount without diminishing advantages of the low temperature combustion from, for example, reducing the PM, maintaining the bed temperature of the catalyst or improving the fuel efficiency. This may not influence condition of air as the state where the air conditioner cannot be driven is not prolonged.

In the aspect of the invention, a frequency of inhibiting the low temperature combustion by the inhibition means within the continuation permission time is limited to a reference number of time in the same continual time for operating the internal combustion engine.

The frequency of inhibiting the low temperature combustion in the continuation permission time is limited to the reference number of time within the same continual period for operating the internal combustion engine. This may prevent further inhibition of the low temperature combustion or drive of the air conditioner. It is possible to accurately detect deterioration in fuel injection amount as well as minimize the influence to the low temperature combustion and condition of air.

In the aspect of the invention, the injection deterioration detection means executes detection of deterioration in the fuel injection amount when the low temperature combustion is not performed by the combustion mode control means after the inhibition means inhibits the low temperature combustion by the reference number of times.

The accuracy in the fuel injection amount control can be maintained so long as deterioration in the fuel injection amount is detected to a certain degree by inhibiting the low temperature combustion. If there is a chance of detecting deterioration in the state that allows the low combustion chamber in the internal combustion engine even after the detection of deterioration in fuel injection amount by inhibiting the low temperature combustion, the accuracy of the deterioration detection may further be improved. Further it is possible to accurately detect deterioration in fuel injection amount in the state where the low temperature combustion is not performed even after the completion of detecting deterioration in fuel injection amount by inhibiting the low temperature combustion.

In the aspect of the invention, the injection deterioration detection means executes detection of deterioration in the fuel injection amount only in one of an idle state and a stable idle state.

The deterioration in fuel injection amount is detected in the idle state or stable idle state so as to allow such detection in the stable load state, resulting in further accurate detection of deterioration.

In the aspect of the invention, the inhibition means inhibits one of the low temperature combustion and both the low temperature combustion and the drive of the air conditioner at a timing when the operation state of the internal combustion engine is changed from a non-idle state to the idle state or just before the timing.

When the low temperature combustion that has been performed in nearly idle state (only cooling water temperature is low) is forcibly inhibited such that the combustion mode is automatically changed from the low temperature combustion to the normal combustion, the combustion noise may be rapidly increased to the normal level. This may make the vehicle operator uncomfortable. The invention is structured to inhibit the low temperature combustion at a time when the state of the internal combustion engine is changed from non-idle to idle state in response to decrease in the engine speed or just before such time like the vehicle is brought into the idle state when the vehicle stops or the vehicle is brought into the idle state from the state at high engine speed immediately after start-up. Accordingly the normal combustion mode has been performed immediately after the vehicle is brought into the idle state. The vehicle operator may not have discomfort resulting from the increase in the noise caused by the change in the combustion mode. It is possible to accurately detect deterioration in fuel injection amount without making the vehicle operator uncomfortable.

In the aspect of the invention, the inhibition means inhibits one of the low temperature combustion and both the low temperature combustion and the drive of the air conditioner when a non-operation state of an accelerator pedal continues for a reference time period.

If the state where the accelerator pedal is not operated continues for a reference time period, it may be assumed that the operation for bringing the internal combustion engine into the idle state is performed by starting the decrease in the engine speed. The low temperature combustion is preliminarily inhibited so as to eliminate the influence of the low temperature combustion. In the case where the drive of the air conditioner is inhibited as well as the low temperature combustion, the influence of both the low temperature combustion and the non-driven state of the air conditioner may be eliminated. This makes it possible to reduce the waiting time for starting detection of deterioration in fuel injection or to eliminate such waiting time after the low temperature combustion. As a result, it is possible to terminate the detection of deterioration in fuel injection amount at an earlier stage.

In the aspect of the invention, recovery reclamation control means is provided for one of adding the fuel from a fuel addition valve in the exhaust system and executing an after injection from a fuel injection valve to an exhaust emission control catalyst provided in the exhaust system.

As a large amount of exhaust gas is recirculated under the low temperature combustion mode, the possibility that the fuel added or supplied by after injection is partially introduced into the combustion chamber in the internal combustion engine becomes high. Accordingly the inhibition means inhibits the low temperature combustion so as to effectively eliminate the cause of the fluctuation other than the deviation in the fuel injection amount.

In the aspect of the invention, the operation control for the internal combustion engine comprises execution of the low temperature combustion by the combustion mode control means, and one of the adding of the fuel and the after injection upon the exhaust gas recirculation.

The operation control of the internal combustion engine, in which the unburned gas is recirculated from the exhaust system of the internal combustion engine by the exhaust gas recirculation mechanism may include the fuel addition or after injection in addition to the low temperature combustion mode. The inhibition means inhibits the low temperature combustion as well as the fuel addition or after injection so as to further eliminate the cause of fluctuation other than the deviation of the fuel injection amount effectively.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
Fig. 1 is a block diagram that schematically shows a diesel engine for a vehicle and a control apparatus according to a first embodiment;
Figs. 2A and 2B is a flowchart representing a control routine for determining permission of detecting deterioration in fuel injection amount, which is executed by an ECU of the first embodiment;
Fig. 3 is a flowchart representing a control routine for determining permission of detecting deterioration in fuel injection amount;
Fig. 4 is a flowchart representing a control routine for learning deterioration in fuel injection amount;
Fig. 5 is a timing chart showing an example of a process executed by the control routine; and
Fig. 6 is a timing chart showing another example of the process executed by the control routine.

### DETAILED DESCRIPTION OF PREFERRED EMBODIMENTS

### Fist Embodiment

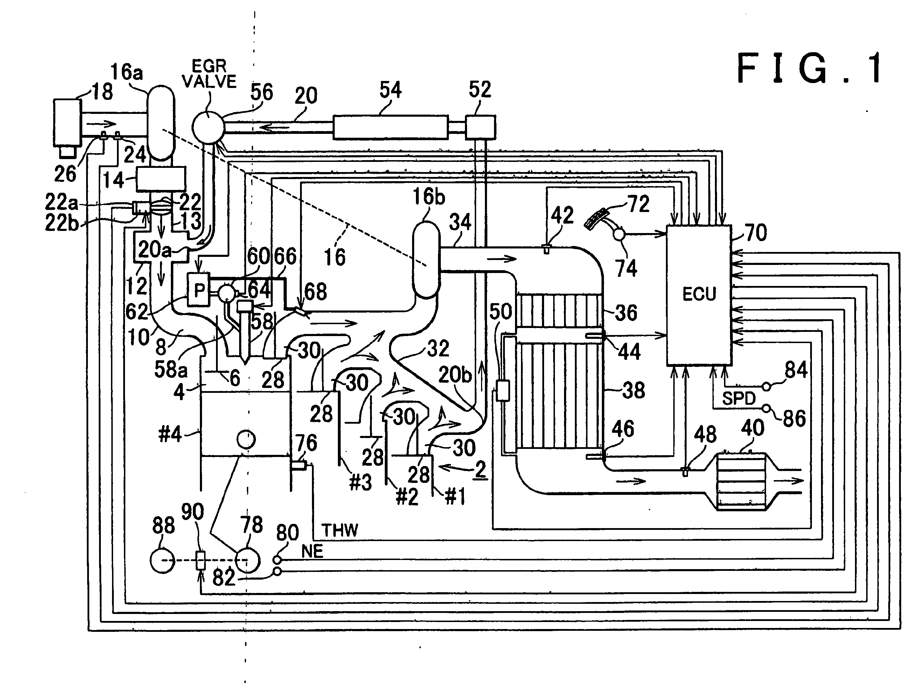

Fig. 1 is a block diagram schematically showing a structure of a vehicular diesel engine and a control apparatus to which the invention has been applied. The invention may be applied to an engine that employs a NOx absorbing/reducing catalyst, for example, a lean burn gasoline engine.

Referring to Fig. 1, a diesel engine 2 includes a plurality of cylinders, that is, four cylinders #1, #2, #3, #4 in this embodiment. Each combustion chamber 4 of the cylinders #1 to #4 is connected to a surge tank 12 via an intake port 8 that is operated by an intake valve 6, and an intake manifold 10. The surge tank 12 is connected to an intercooler 14 and an outlet of a supercharger, that is, a compressor 16a of a turbo charger 16 via an intake air passage 13. An inlet of the compressor 16a is connected to an air cleaner 18. An EGR gas supply port 20a of an exhaust gas recirculation (hereinafter referred to as EGR) passage 20 is opened to the surge tank 12. The intake air passage 13 between the surge tank 12 and the intercooler 14 is provided with a throttle valve 22, and an intake air amount sensor 24 and an intake air temperature sensor 26 are provided between the compressor 16a and the air cleaner 18.

Each combustion chamber 4 of the cylinders #1 to #4 is connected to an inlet of an exhaust turbine 16b of the exhaust turbocharger 16 via an exhaust port 30 operated by an exhaust valve 28 and an exhaust manifold 32. An outlet of the exhaust turbine 16b is connected to an exhaust passage 34. The exhaust gas is introduced by the exhaust turbine 16b in the exhaust manifold 32 from the fourth cylinder #4.

Three catalytic converters 36, 38, and 40 each containing a catalyst for exhaust emission control are provided within the exhaust passage 34. The first catalytic converter upstream of the exhaust passage 34 contains a NOx absorbing/reducing catalyst that functions in absorbing NOx in the state where the exhaust gas is in an oxidizing atmosphere (lean state) during a normal operation of the diesel engine, and functions in reducing NOx that has been absorbed by the catalyst as NO with HC and CO in a reducing atmosphere (stoichiometric or rich state). The NOx absorbing reducing catalyst serves to purify NOx in the aforementioned manner.

The second catalytic converter 38 at an intermediate position in the exhaust passage 34 contains a filter having a wall portion formed into a monolith structure such that the exhaust gas passes through micro pores formed within the wall portion. The NOx absorbing reducing catalyst is coated on the filter surface such that the NOx can be purified as described above. The filter is further structured to trap particulate matters (PM) contained in the exhaust gas on its surface. Accordingly oxidation of the PM is started using activated oxygen generated upon absorption of NOx in the oxidizing atmosphere such that surrounding excessive oxygen functions in oxidizing the PM in the oxidizing atmosphere. A large amount of activated oxygen generated from the NOx absorbing reducing catalyst in the reducing atmosphere (stoichiometric or rich) serves to promote oxidation of the PM. This makes it possible to purify the NOx and PM.

The third catalytic converter 40 downstream of the exhaust passage 34 contains an oxidation catalyst for oxidizing HC and CO so as to be purified.

A first air/fuel ratio sensor 42 is provided upstream of the first catalytic converter 36, and a first exhaust gas temperature sensor 44 is provided between the first catalytic converter 36 and the second catalytic converter 38. A second exhaust gas temperature sensor 46 is provided near the second catalytic converter 38, and a second air/fuel ratio sensor 48 is provided near the third catalytic converter 40, both of which are positioned between the second catalytic converter 38 and the third catalytic converter 40.

Each of the first air/fuel ratio sensor 42 and the second air/fuel ratio sensor 48 serves to detect an air/fuel ratio of the exhaust gas based on the component of the exhaust gas at the respective positions such that a voltage signal in proportion to the air/fuel ratio is linearly output. Each of the first exhaust gas temperature sensor 44 and the second exhaust gas temperature sensor 46 serves to detect the exhaust gas temperature at the respective positions.

A differential pressure sensor 50 is connected between the upstream side and the downstream side of the second catalytic converter 38 via piping for detecting the differential pressure between the upstream and the downstream of the second catalytic converter 38 so as to detect a clogging therein.

The EGR gas inlet 20b of the EGR passage 20 opens to the exhaust manifold 32. The EGR gas inlet 20b opens at the side of the first cylinder #1, opposite to the side of the fourth cylinder #4 from where the exhaust gas is introduced by an exhaust turbine 16b.

An iron EGR catalyst 52 for reformating the EGR gas from the EGR gas inlet 20b of the EGR passage 20 is provided in the intermediate position thereof as well as an EGR cooler 54 for cooling the EGR gas. The EGR catalyst 52 exhibits the function in preventing the clogging of the EGR cooler 54. An EGR valve 56 is provided at a position around the EGR gas supply port 20a. The EGR passage 20, the EGR catalyst 52, the EGR cooler 54, and the EGR valve 56 constitute the exhaust gas recirculating mechanism. Amount of EGR gas supplied from the EGR gas supply port 20a to the intake side is adjustable by controlling an opening degree of the EGR valve 56.

Each fuel injection valve 58 provided in the respective cylinders #1 to #4 for directly injecting the fuel into the respective combustion chambers 4 is connected to a common rail 60 via a fuel supply pipe 58a. The fuel is supplied into the common rail 60 from an electrically controlled fuel pump 62 that is capable of adjusting supply/discharge amount. The high pressure fuel supplied within the common rail 60 from the fuel pump 62 is divided so as to be supplied to the respective fuel injection valves 58 via the respective fuel supply pipes 58a. The common rail 60 is provided with a fuel pressure sensor 64 for detecting the fuel pressure.

The fuel pump 62 supplies a low pressure fuel to an addition valve 68 via a fuel supply pipe 66. The exhaust port 30 of the fourth cylinder #4 is provided with the addition valve 68 which serves to inject the fuel toward the exhaust turbine 16b so as to add the fuel during emission. The added fuel makes it possible to make the exhaust gas temporarily in the reducing atmosphere such that the NOx absorbed in the first and the second catalytic converters 36, 38 may be reduced and purified. The purification of the PM that has been accumulated within the second catalytic converter 38 is further executed. The fuel is added from the addition valve 68 based on the degree of poisoning of sulfur (hereinafter referred to as S-poisoning) with respect to the NOx absorbing/reducing catalyst so as to be heated to a high temperature and recovered.

An electronic control unit (hereinafter referred to as an ECU) 70 is mainly formed of a digital computer including CPU, ROM, RAM, and a drive circuit for driving various devices. The ECU 70 receives signals transmitted from an intake air amount sensor 24, an intake air temperature sensor 26, the first air/fuel ratio sensor 42, the first exhaust gas temperature sensor 44, the second exhaust gas temperature sensor 46, the second air/fuel ratio sensor 48, the differential pressure sensor 50, the EGR opening sensor within the EGR valve 56, the fuel pressure sensor 64 and the throttle opening sensor 22a. The ECU 70 also receives signals transmitted from an accelerator opening sensor 74 that detects an operating amount of an accelerator pedal 72, and a cooling water temperature sensor 76 that detects a cooling water temperature within the diesel engine 2. The ECU 70 further receives signals from an engine speed sensor 80 that detects a number of rotation of a crankshaft 78, and a cylinder determination sensor 82 that detects a rotating phase of the crankshaft 78 or a rotating phase of the intake cam so as to determine the cylinder. The ECU 70 also receives signals from an air conditioner switch 84 that sets on/off state of an air conditioner within the vehicle, and a vehicle speed sensor 86 provided at the output side of the axle or the transmission.

The ECU 70 executes a fuel injection timing control or a fuel injection amount control using the fuel injection valve 58 based on the engine operating state and the like indicated by those received signals. The ECU 70 further executes a control of the opening degree of the EGR valve 56, a control of a throttle opening using the motor 22b, a control of discharge amount of the fuel pump 62, a control of drive of the air conditioner, and a control of detecting deterioration in fuel injection amount (described later). For example, an EGR control is executed by adjusting a throttle opening TA and an EGR opening (opening degree of the EGR valve 56) detected by the signal of the throttle opening sensor 22a such that the EGR ratio becomes a target value that is set based on the engine load (or fuel injection amount) and an engine speed NE. Then an intake air amount feedback control is executed by adjusting the EGR opening such that the intake air amount becomes a target value (per revolution of the engine) that is set based on the engine load (or fuel injection amount) and the engine speed NE. The ECU 70 selectively executes a combustion mode control between a normal combustion mode and a low temperature combustion mode depending on the operation state. Under the low temperature combustion mode, a large amount of exhaust gas is recirculated to suppress the rise in the combustion temperature such that NOx and smoke are simultaneously reduced. In this embodiment, the low temperature combustion is performed in the area at low load and low engine speed. The combustion mode other than the low temperature combustion refers to the normal combustion mode where a normal EGR control (including the case where the exhaust gas is not recirculated) is executed.

A catalytic control includes four modes, that is, PM reclamation control mode, S-poisoning recovery mode, NOx reduction control mode, and normal control mode. Under the PM reclamation control mode, the PM accumulated especially within the second catalytic converter 38 is burned so as to be discharged in the form of CO₂ and H₂O. In this mode, addition of the fuel from the addition valve 68 or after injection from the fuel injection valve 58 is continuously performed with repetition such that the bed temperature of the catalyst is increased to a high temperature, for example, 600 to 700°C. The S-poisoning recovery control mode is selected to discharge sulfur that has poisoned the NOx absorbing/reducing catalyst within the first catalytic converter 36 and the second catalytic converter 38 and deteriorated its NOx absorbing capability. In this mode, addition of the fuel from the addition valve 68 or after injection from the fuel injection valve 58 is continuously performed with repetition such that the bed temperature of the catalyst is increased to a high temperature, for example, 600 to 700°C. The NOx reduction control is selected to reduce NOx absorbed in the NOx absorbing/reducing catalyst within the first and the second catalytic converters 36, 38 to be discharged in the form of N₂, CO₂, and H₂O. In this mode, addition of the fuel from the addition valve 68 or after injection from the fuel injection valve 58 is intermittently performed at a relatively long time interval such that the bed temperature of the catalyst becomes relatively low, for example, 250 to 500°C. The mode other than the aforementioned modes refers to the normal control mode in which addition of a reducing agent from the addition valve 68 or after injection from the fuel injection valve 58 is not performed. The respective executions of the PM reclamation control mode, S-poisoning recovery control mode, and the NOx reduction control mode correspond to the process to be executed by the recovery reclamation control means of the invention.

When the air conditioner switch 84 has been turned ON to operate the air conditioner, an electromagnetic clutch 90 is operated to engage the crankshaft 78 with the compressor 88 for the air conditioner so as to be driven.

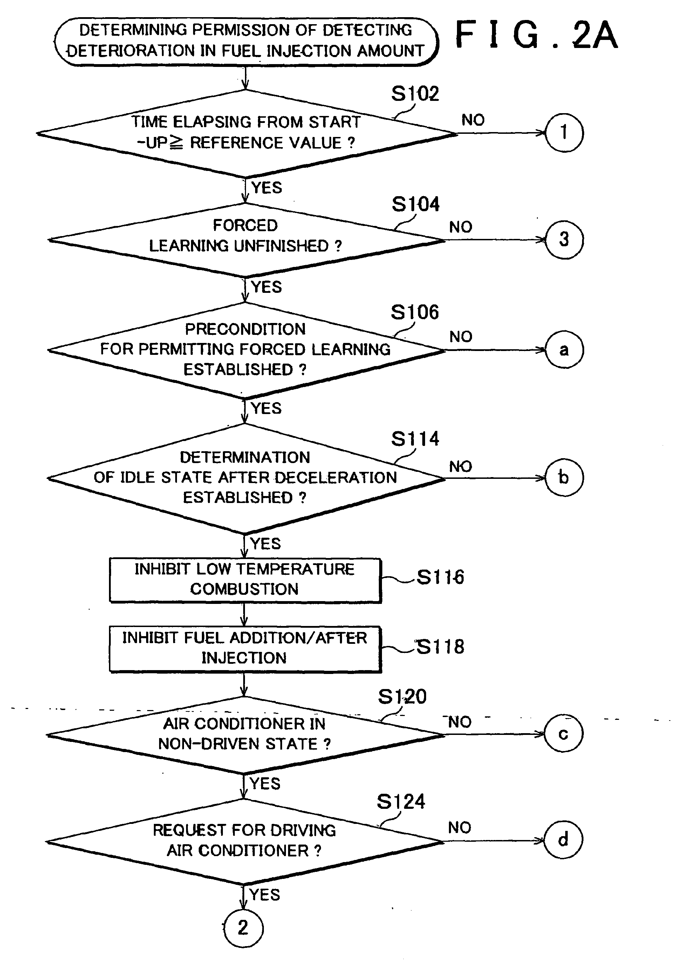

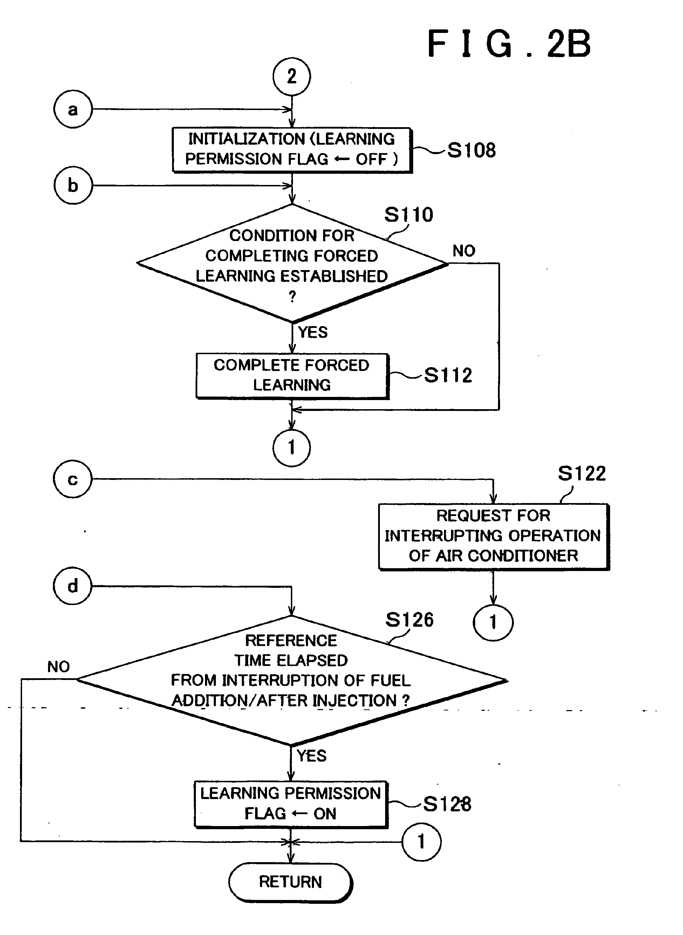

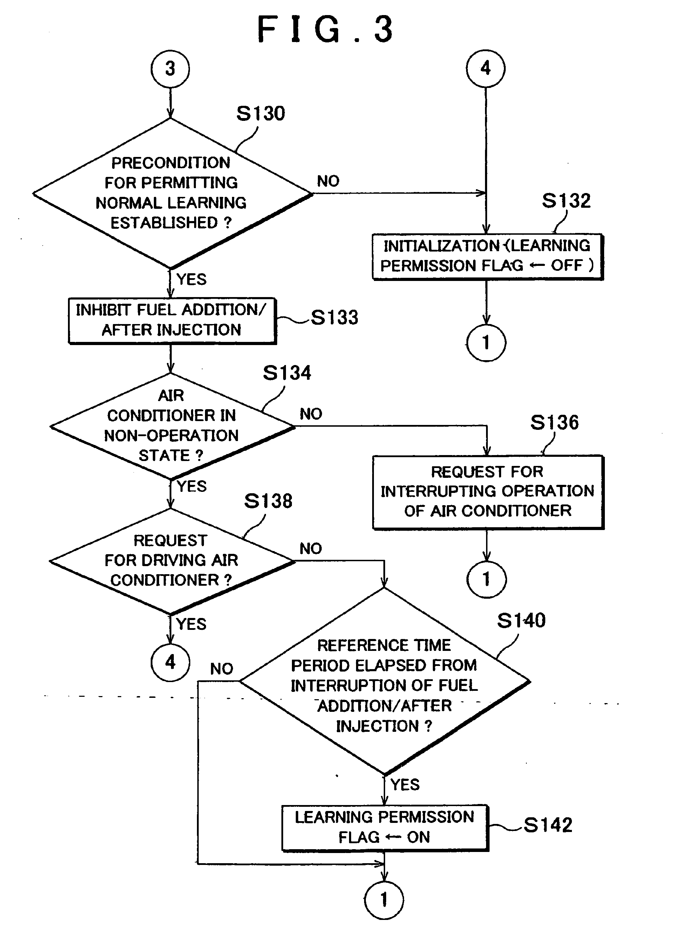

Figs. 2A, 2B and 3 are flowcharts representing a control routine for determining permission of detecting deterioration in fuel injection amount, which is executed by the ECU. This routine is executed by interruption at a predetermined interval, that is, 8 ms. Each step executed in this routine in the flowchart will be referred to as S hereinafter.

Upon start of this routine, it is determined whether the time elapsing from the start-up is equal to or longer than a reference time value in S102. The accurate correlation between the fuel injection amount command value and combustibility (engine speed NE as the physical value indicating combustibility) cannot be obtained yet in an idle state immediately after start-up. Therefore, a predetermined time has to be elapsed from the start-up until the accurate correlation can be obtained. If the time elapsing from the start-up is shorter than the reference value, that is, NO is obtained in S102, the routine ends.

If the time elapsing from the start-up is equal to or longer than the reference time value, that is, YES is obtained in S102, the process proceeds to S104 where it is determined whether the forced learning is unfinished. The forced learning represents that deterioration in the fuel injection amount supplied from the fuel injection valve 58 is learned based on the correlation between the fuel injection amount command value and the combustibility by inhibiting the low temperature combustion.

If the forced learning is unfinished, that is, YES is obtained in S104, the process proceeds to S106 where it is determined whether a precondition for the forced learning permission has been established. The precondition for the forced learning permission includes that:
(A1) an accelerator opening degree ACCP is equal to 0°, that is, ACCP = 0°;
(A2) an engine speed NE is equal to or higher than 600 rpm, and lower than 1500 rpm, that is, 600 rpm ≦ NE < 1500 rpm;
(A3) a cooling water temperature THW is equal to or higher than 80°C after warm-up, that is, THW > 80°C;
(A4) a vehicle speed SPD is equal to 0 km/h, that is, SPD = 0 km/h; and
(A5) the time is within a learning permission time. The learning permission time refers to the permitted time for continuing the forced learning. In this embodiment, the learning permission time is set to 4s.

The preconditions A1 to A4 correspond conditions for determining an idle state. If at least one of the aforementioned preconditions A1 to A5 is not satisfied, that is, NO is obtained in S106, the process proceeds to S108 where an initialization is executed. In the initialization, a learning permission flag is set to OFF, and the low temperature combustion, the fuel addition and after injection that have been inhibited during the forced learning are permitted. In the case where interruption of the operation of the air conditioner is required during the forced learning, such request is canceled to permit drive of the air conditioner. The after injection from the fuel injection valve 58 is executed in the expansion stroke or the exhaust stroke such that the exhaust gas from the combustion chamber 4 allows the fuel supply to the first and the second catalytic converters 36, 38.

Then in S110, it is determined whether the forced learning completion set condition has been established. Such condition is established if one of the conditions as described below is satisfied.

(B1) The forced learning has been completed by a reference number of times in this trip. In this embodiment, the reference number of time is set to 1. The number of time may be set to the value equal to or greater than 1. However, setting the number of time to 1 may be sufficient. In the case where the reference number of time is set to 1, inhibition of the low temperature combustion or drive of the air conditioner may be performed as least as possible. This makes it possible to prevent the occupant of the vehicle from experiencing uncomfortable feel about condition of air without diminishing the effects derived from reducing the PM, maintaining the bed temperature of the catalyst or improving fuel efficiency under the low temperature combustion mode.

(B2) The precondition for forced learning permission has been established but the condition for determining idle state after deceleration is not established. That is, NO is obtained in S114 to be described below. The condition B2 may be omitted so as to make a determination with respect only to the condition B 1 in S110. In this embodiment, the condition B1 or the condition B2 is not established, that is, NO is obtained in S110. Accordingly the routine ends.

If all the preconditions A1 to A5 have been established, that is, YES is obtained in S106, the process proceeds to S114 where it is determined whether determination of idle state after deceleration has been established. The determination of idle state after deceleration is made to determine whether the running vehicle is stopped and brought into the idle state. That is, in the state where all the preconditions A1 to A4 for determining idle state are established except A3, when the condition A3 is satisfied and the idle state is determined, the forced learning is terminated without being executed. The determination is made to prevent change in the combustion mode from the low temperature combustion mode to the normal combustion mode owing to inhibition of the low temperature combustion upon determination of the idle state in the state where the low temperature combustion has been already performed before the vehicle is brought into the idle state.

If the state in which only the precondition A3 is not satisfied is changed to the state where all the preconditions are satisfied, that is, YES is obtained in S106, NO is obtained in S114. The process then proceeds to S110 where it is determined whether the condition for setting completion of forced learning is established. As the condition B2 has been satisfied, that is, YES is obtained in S110, the process proceeds to S112 where the completion of forced learning is set. The control routine, then, ends.

If YES is obtained in S102 in the subsequent cycle, NO is obtained in S104 as the completion of the forced learning has been already set in S112 in the previous cycle. Then the process proceeds to S130 in Fig. 3 where it is determined whether the precondition for normal learning permission has been established. The process in S130 and subsequent steps will be described hereinafter.

The process to be executed if the determination of idle state after deceleration is established, that is, YES is obtained in S114 will be described. In this case, the low temperature combustion is inhibited in S116. The normal combustion mode under the combustion control routine executed by the ECU 70 is only executed.

Then in S118, the fuel addition and the after injection are inhibited in case that the addition of the fuel from the addition valve 68 or after injection from the fuel injection valve 58 has been performed under the catalytic control mode such as NOx reduction, PM reclamation, or S-poisoning recovery. The aforementioned process is executed so as not to give an adverse influence to the combustibility of the engine 2 by a part of a large amount of the fuel added from the addition valve 68 or the fuel supplied by the after injection, which may be introduced into the intake air through the EGR passage 20. If the addition valve 68 is provided at a position where the added fuel is never admitted from the EGR gas inlet 20b, the inhibition of the addition of the fuel from the addition valve 68 is not required.

It is determined whether the air conditioner has been in a non-driven state based on driven state information with respect to the air conditioner drive control executed by the ECU 70 in S120. If the air conditioner has been in the non-driven state, that is, YES is obtained in S120, the process proceeds to S124 where it is determined whether an air conditioner drive command (for operating the air conditioner switch 84 to ON from OFF) has been issued. This determination is made to determine if there is a request for driving the air conditioner during the forced learning. If there is no request for driving the air conditioner, that is, NO is obtained in S124, the process proceeds to S126 where it is determined whether a time elapsing from interruption both in the fuel addition and the after injection exceeds a reference time period, that is, 20 s. If the time does not exceed the reference value, that is, NO is obtained in S126, the control routine ends. If the time has already exceeded the reference time period, or the reference time period elapses after the state where NO is obtained in S126 is continued, that is, YES is obtained in S126, the process proceeds to S128. In S128, the learning permission flag is set to ON, and the control routine ends. In the subsequent steps in the next cycle, so long as YES is obtained in S102, S104, S106, S114, and S120, NO is obtained in S124, and YES is obtained in S126, the state where the learning permission flag is set to ON is continued.

If it is determined that the air conditioner has been driven in S120, that is, NO is obtained in S120, the process proceeds to S122 where the request for interrupting the air conditioner operation is issued to the air conditioner drive control. Upon receipt of the request, the electromagnetic clutch 90 is disengaged so as to release the load applied to the engine 2 by the compressor 88 for the air conditioner. Then the control routine ends.

In S120 in the next cycle, as the air conditioner has been in the non-driven state, YES is obtained. If the request for driving the air conditioner is not issued, that is, NO is obtained in S124, the process proceeds to S126 where it is determined whether a reference time has elapsed after interruption of the fuel addition and the after injection. If the reference time elapses or it has already elapsed, that is, YES is obtained in S126, the learning permission flag is set to ON in S128. Then the control routine ends. In the next and subsequent cycles, the state where the learning permission flag is set to ON (S128) is continued so long as YES is obtained in S102, S104, S106, S114, and S120, and NO is obtained in S124, and YES is obtained in S126. If the air conditioner has been driven upon start of the forced learning, the drive of the air conditioner will be temporarily interrupted.

In the case where the air conditioner switch 84 is turned ON from OFF when the state where the learning permission flag is set to ON (S128) is continued, YES is obtained in S120. In this case, however, as the request for driving the air conditioner is issued, that is, YES is obtained in S124, the aforementioned initialization process is executed in S108. As the low temperature combustion, the fuel addition and after injection, and the drive of the air conditioner becomes ready to be performed, the learning permission flag is set to OFF. As the forced learning has been completed once in the present trip, the condition for setting completion of the forced learning is established, that is, YES is obtained in S110. Then the completion of the forced learning is executed in S112. In the next cycle, NO is obtained in S104 such that further continuation of the forced learning will be inhibited.

If any one of those conditions A1, A2 and A4 is not satisfied upon start-up of the vehicle, or the condition A5 is not satisfied owing to the elapse of the learning permission time (4s), that is, NO is obtained in S106, both S108 and S112 are executed. Then NO will be obtained in S104 in the next cycle, thus inhibiting further continuation of the forced learning.

The process to be executed after completion of the forced learning, that is, NO is obtained in S104 will be described. In this case, it is determined whether the preconditions for normal learning permission are established in S130. The preconditions for normal learning permission include conditions as described below.

(C1) The vehicle is in a stable idle state. All the conditions from A 1 to A4 are satisfied, and fluctuation in the engine speed NE is reduced so as to be in a stable state.

(C2) The vehicle is operated under the catalytic control mode of either PM reclamation or S-poisoning recovery after the stable idle state is continued for a reference period of time, and the low temperature combustion is not performed.

(C3) The vehicle is operated within the learning permission period representative of the time permitted for continuing the normal learning. Likewise the forced learning, the permitted time is set to 4s. It may be set to the value that is longer or shorter than the time permitted for the forced learning.

(C4) The normal learning is unfinished in the stable idle state.

If at least one of the aforementioned conditions C1 to C4 is not satisfied, that is, NO is obtained in S130, the process proceeds to S132 where the initialization is executed. The initialization is executed by setting the learning permission flag to OFF, and permitting execution of the fuel addition and the after injection which have been inhibited in order to perform the normal learning. In the case where the request for interrupting the air conditioner operation has been issued to perform the normal learning, such request is cancelled so as to allow the air conditioner to be driven. Then the control routine ends.

If all the conditions C1 to C4 are satisfied, that is, YES is obtained in S 130, the fuel addition from the addition valve 68 or the after injection from the fuel injection valve 58 will be continuously performed upon PM reclamation or S-poisoning recovery control mode. Accordingly, the fuel addition and the after injection are inhibited in S133 so as to eliminate the influence of the EGR as described with respect to S118.

In S134, it is determined whether the air conditioner has been in a non-driven state. If it is determined that the air conditioner is in the non-driven state, that is, YES is obtained in S134, the process proceeds to S138 where it is determined whether the request for driving the air conditioner has been issued. The determination is made to determine if there is a request for driving the air conditioner during the normal learning. If it is determined that the request for driving the air conditioner is not issued, that is, NO is obtained in S138, the process proceeds to S140 where it is determined whether a reference time period (20 s) has elapsed from interruption of the fuel addition and the after injection. If the reference time period has not elapsed, that is, NO is obtained in S140, the control routine ends. If the reference time has already elapsed, or the reference time has elapsed after the state where NO is obtained in S140 is continued, that is, YES is obtained in S140, the learning permission flag is set to ON in S142. Then the control routine ends. In the next cycle onward, the state in which the learning permission flag is set to ON in S142 is continued so long as YES is obtained in S102, NO is obtained in S104, YES is obtained both in S130, S134, NO is obtained in S138, and YES is obtained in S140, respectively.

If it is determined that the air conditioner has been already driven, that is, NO is obtained in S134, the process proceeds to S136 where the request for interrupting the air conditioner operation under the air conditioner drive control. Under the aforementioned control, the electromagnetic clutch 90 is immediately disengaged such that the load of the compressor 88 for the air conditioner to the engine 2 is released. Then the control routine ends.

In the next cycle, the air conditioner has been in the non-driven state, and as a result, YES is obtained in S134. If there is no request for driving the air conditioner, that is, NO is obtained in S138, the process proceeds to S140 where it is determined whether the reference time has elapsed from interruption of both the fuel addition and the after injection. If the reference time has already elapsed as described above, that is, YES is obtained in S140, the process proceeds to S142 where the learning permission flag is set to ON. The control routine ends. In the next cycle onward, the state where the learning permission flag is set to ON in S142 is continued so long as YES is obtained in S102, NO is obtained in S104, YES is obtained in both S130 and S134, NO is obtained in S138, and YES is obtained in S140. If the air conditioner has been driven upon start of the normal learning, the operation of the air conditioner is temporarily interrupted.

When the air conditioner switch 84 is switched from OFF to ON in the case where the ON state of the learning flag is continued in S142, YES is obtained in S134. In this case, however, the request for driving the air conditioner is issued, that is, YES is obtained in S138, the process proceeds to S132 where the initialization is executed so as to allow the fuel addition, after injection, and drive of the air conditioner. As a result, the learning flag is returned to OFF. This may terminate the normal learning in the stable idle state. Accordingly, the condition C4 as one of the normal learning permission preconditions is not satisfied, that is, NO is obtained in S130. In the subsequent control cycle, the initialization executed in S132 is continued. If any one of those conditions C1, C2, and C3 cannot be satisfied, the initialization is executed in S132 without executing the normal learning.

When the vehicle is brought into the stable idle state, and all the conditions of C1 to C4 are established, that is, YES is obtained in S130, the normal learning can be executed again in the same trip.

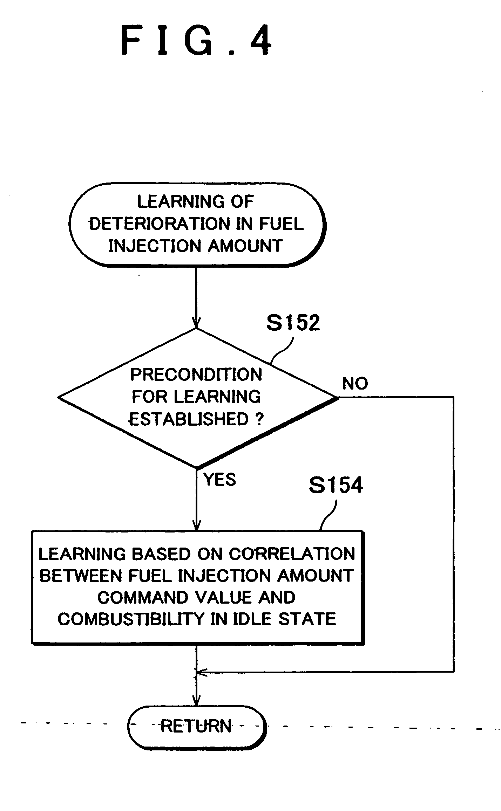

The control routine for learning deterioration in fuel injection amount executed in accordance with setting of the learning permission flag in the control routine for determining permission for detecting deterioration in the fuel injection amount (Figs. 2 and 3) will be described referring to the flowchart in Fig. 4. This routine is repeatedly executed at a predetermined time interval, for example, 256 ms.

Upon start of the routine, it is determined whether the learning precondition has been established in S152. The precondition may include the following conditions.

(D1) The vehicle is in the stable idle state.

(D2) A reference time period, for example, 2s has elapsed after driving the air conditioner. Setting of the aforementioned conditions allows the learning of deterioration in fuel injection amount after elapse of the reference time interval even if the drive of the air conditioner is interrupted in response to the request for interrupting the operation of the air conditioner in S122 and S135 in the process for determining permission of detecting deterioration in the fuel injection amount (Figs. 2 and 3).

(D3) The learning permission flag is set to ON.

If at least one of those conditions is unsatisfied, that is, NO is obtained in S152, the routine ends without executing the substantial learning of deterioration in fuel injection amount.

If all the conditions D1 to D3 are satisfied, that is, YES is obtained in S152, the learning of deterioration in fuel injection amount starts in S154.

The learning of deterioration in fuel injection amount is performed based on a correlation between the fuel injection amount command value in the idle state and the combustibility. The learning of deterioration in the fuel injection amount may be performed in various forms as disclosed in Japanese Patent Application Laid-Open Publications No. 2003-56389 and No. 2002-89333. For example, immediately after the vehicle is shipped, the friction in the engine owing to fittings among various operative components may be reduced. Such reduction in the friction of the engine may decrease the fuel injection amount required to maintain the target engine speed in the idle state. Accordingly the fuel injection amount command value in the idle state is gradually decreased in accordance with the reduction in the friction of the engine. Then the deterioration in the engine occurs by the friction which proceeds with age resulting from long use of the fuel injection valve 58, thus changing the injection efficiency. The aforementioned deterioration with age may gradually increase the fuel injection command value. As the service period of the fuel injection valve 58 becomes longer, the friction generated in the contact portion between the needle and the seat of the fuel injection valve 58 is accelerated, thus moving the needle downward of the seat portion from the original position. The time for the needle to rise up becomes longer upon opening of the valve, and as a result, the timing for starting the fuel injection is delayed. The decrease in the injection efficiency, that is, the fuel injection amount command value set as the valve opening time becomes large in spite of the same fuel injection amount.

The influence of the deterioration owing to aging of the fuel injection valve 58 to the fuel injection amount command value in idle state may be observed as the increase in the fuel injection amount command value from the moment when the fuel injection amount command value in idle state is minimized by the reduction in the engine friction. In this embodiment, the minimum value of the fuel injection amount command value in the idle state is set to the reference value Qstd. The difference ΔQ between the fuel injection amount command value (average injection amount Qave in idle state) in the idle state when the reference value Qstd is obtained and the reference value Qstd, that is, ΔQ = Qave - Qstd, is obtained as the deterioration correction learned value Qdtcm that represents aging of the fuel injection valve 58. Accordingly the fuel injection amount deterioration learning is executed. The resultant deterioration correction learned value Qdtcm is used for correcting the fuel injection amount command value in various operation areas of the engine 2.

In the case where any one of those learning preconditions D1 to D3 becomes unsatisfied, that is, NO is obtained in S152 during learning of deterioration in fuel injection amount, such learning (S154) is immediately interrupted. The deterioration correction learned value Qdtcm just before the interruption is stored in the back-up RAM or a flash memory provided within the ECU 70 until subsequent start of the next normal learning, the forced learning and normal learning in the next trip so as to be used for correcting the fuel injection amount.

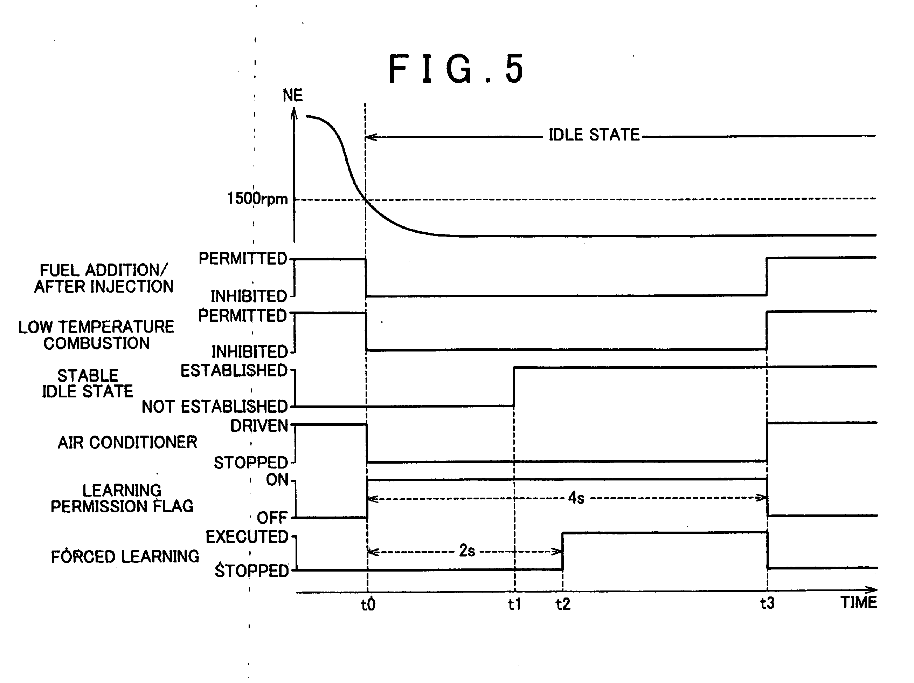

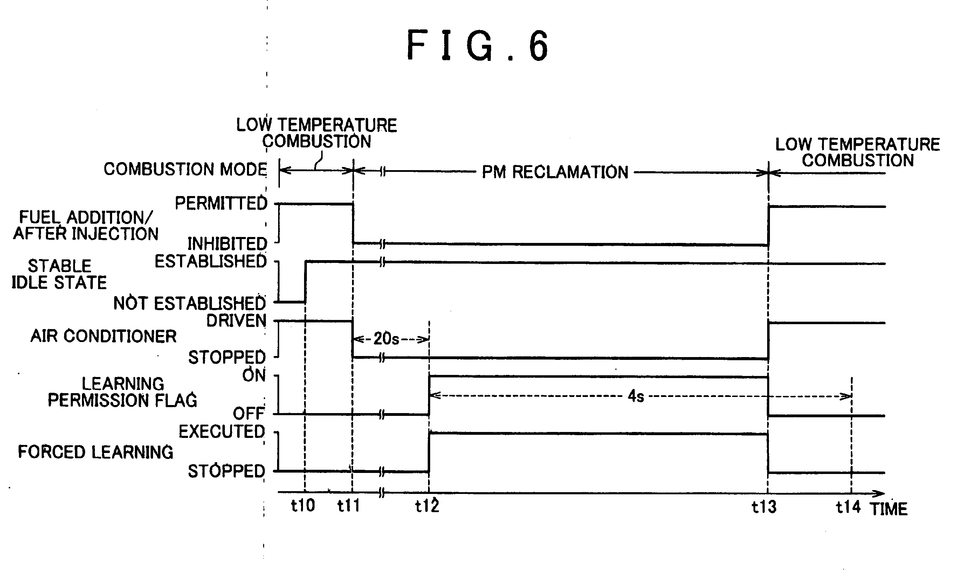

An example of the control routine of the embodiment is represented by the timing charts shown in Figs. 5 and 6. The timing chart shown in Fig. 5 represents the forced learning of the deterioration in fuel injection amount. Upon complete release of the accelerator pedal 72 by the vehicle operator, the engine speed NE is reduced and the vehicle is brought into the idle state. Then the forced learning permission preconditions and idle determination after deceleration are established at a time point t0. The low temperature combustion and the fuel addition/after injection are inhibited, and the operation of the air conditioner is interrupted. The state where the fuel addition and the after injection are inhibited has been continued from the timing before 20s. Accordingly the learning permission flag is immediately set to ON. Then the vehicle is brought into the stable idle state at a time point t1, and this state continues until an elapse of 2s after interruption of the air conditioner operation. At a time point t2, the forced learning of deterioration in fuel injection amount starts. When the time period at which the learning permission flag is set to ON reaches 4s at a time point t3, such flag is set to OFF to terminate the forced learning. The driven state of the air conditioner is returned to the original state such that the low temperature combustion and the fuel addition/after injection are allowed. Assuming that the learning permission flag is set to ON in the state where the air conditioner is not driven, such flag may be set to OFF upon the air conditioner drive request within 4s (t0 to t3). Accordingly the forced learning is terminated or held unexecuted, thus allowing execution of the low temperature combustion, fuel addition/after injection, and drive of the air conditioner.

The timing chart shown in Fig. 6 represents the normal learning of deterioration in fuel injection amount. During low temperature combustion in the idle state, the vehicle is brought into the stable idle state at a time point t10. Then the PM reclamation is executed under the catalytic control mode at a time point t11. Under the PM reclamation mode, the fuel addition or the after injection is continuously executed with repetition. If the normal learning permission preconditions are established, that is, YES is obtained in S130, the fuel addition and the after injection are inhibited, and the drive of the air conditioner is interrupted. After elapse of 20s from interruption of the fuel addition and the after injection, the learning permission flag is set to ON at a time point t12. This may start the normal learning of deterioration in fuel injection amount. As the low temperature combustion mode starts before the time period at which the flag is set to ON reaches 4s (t12 to t14) at a time point t13, the flag is immediately set to OFF so as to terminate the normal learning. The driven state of the air conditioner, thus, can be resumed. Assuming that the normal learning permission preconditions are established when the air conditioner is in the non-driven state, that is, YES is obtained in S130, the normal learning may be terminated or held unexecuted upon the request for driving the air conditioner within 24s (t11 to t14), allowing the fuel addition and the after injection. Accordingly the air conditioner can be brought into the driven state.

The ECU 70 executes the combustion mode control as well as detection of deterioration in fuel injection amount as shown in Figs. 2, 3 and 4. Steps from S130 to S142 and the learning of deterioration in fuel injection amount (Fig. 4) correspond the process for detecting deterioration in fuel injection, and steps from S106 to S116 and S120 to S128 correspond the inhibiting procedure.

The following effects may be derived from the aforementioned embodiment.

(1) In the engine 2 where the low temperature combustion is performed, the normal combustion is performed by inhibiting the low temperature combustion upon detection of deterioration in fuel injection amount. This may eliminate the cause of fluctuation in the combustibility except deviation of the fuel injection amount. As a result, the deterioration in the fuel injection amount may be accurately detected in spite of few chances of the combustion other than the low temperature combustion.

(2) The low temperature combustion is inhibited simultaneously with interruption of drive of the air conditioner based on the output of the engine 2. This may effectively eliminate the fluctuation in combustibility observed in the engine speed NE as the drive of the air conditioner, allowing further accurate detection of deterioration in fuel injection amount.

(3) A continuation permission time is set for inhibiting the low temperature combustion. Upon elapse of the continuation permission time, each inhibition of the low temperature combustion and the drive of the air conditioner is released so as to terminate detection of deterioration in fuel injection amount. The aforementioned time makes it possible to execute learning of deterioration in fuel injection amount by temporarily inhibiting the low temperature combustion and the drive of the air conditioner. As a result, the time period taken for such inhibition is not elongated. This may allow accurate detection of deterioration in fuel injection amount without impairing the effects derived from the low temperature combustion, for example, reducing the PM, maintaining the bed temperature of the catalyst, improving the fuel efficiency and the like. Further the drive of the air conditioner is interrupted so as not to influence the conditioner of air by limiting the time for the inhibition.

(4) The frequency of inhibiting the low temperature combustion within the continuation permission time is limited to a reference number of time (once in the embodiment) within the same continual engine operation time. This may prevent unnecessary repetition of inhibiting the low temperature combustion or the drive of the air conditioner. This allows accurate detection of deterioration in fuel injection amount without giving the influence of the inhibition to the effect of the low temperature combustion or the condition of air.

(5) If the deterioration in fuel injection amount is detected to a certain degree upon completion of learning of deterioration in fuel injection amount by inhibiting the low temperature combustion, the accuracy of the fuel injection amount control can be maintained. If the learning of such deterioration is allowed in the state where the low temperature combustion in the engine 2 is not restrained, the accuracy in learning of the deterioration may further be improved even after execution of the detection of deterioration while inhibiting the low temperature combustion. The deterioration in fuel injection amount is detected especially in the state where the low temperature combustion is not performed. This may allow further accurate learning of deterioration in fuel injection amount.

(6) The forced learning while inhibiting the low temperature combustion may be performed only when the vehicle state is changed from the non-idle state to the idle state in response to the decrease in the engine speed NE, for example, upon stop of the vehicle that has been running, or shifting to the idle state from the state at high engine speed immediately after start-up (S114). In the state where the normal combustion is performed immediately after the vehicle is brought into the idle state, the forced learning is performed. This may prevent the inhibition of the low temperature combustion in accordance with the misconception that the vehicle is in the idle state owing to the water temperature equal to or higher than 80° C. This may prevent the increase in the combustion noise of the normal combustion from the low temperature combustion with low noise. The discomfort experienced by the vehicle operator owing to the sudden increase in the combustion noise may be reduced, thus accurately detecting deterioration in fuel injection amount.

(7) The fuel addition and the after injection are inhibited upon execution of the learning (S118 and S133). This may prevent a part of the fuel added from the addition valve 68 or supplied from the fuel injection valve 58 from being introduced in the intake air on the EGR passage 20 to give an influence on the combustibility of the engine 2. The cause of fluctuation in the combustibility except deviation of the fuel injection amount can further be effectively eliminated.

### Other Embodiment

(a) The condition A1, that is, "the state where the accelerator opening ACCP = 0° continues for a reference period of time" may replace the condition A4, that is, "the vehicle speed SPD = 0 km/h" among those used in S106. This makes it possible to perform the inhibition of low temperature combustion, and interruption of the fuel addition, after injection and air conditioner operation may be performed at an earlier stage. In the stable idle state including the condition of "vehicle speed SPD = 0 km/h", the time taken until the influence to the low temperature combustion, fuel addition, after injection and interruption of the air conditioner operation disappears may become short, or setting of such time becomes unnecessary. This makes it possible to start accurate forced learning earlier and to terminate the learning also at an earlier state.

(b) In the embodiment, the drive of the air conditioner during the forced learning and the normal learning is inhibited. However, if the vehicle is not provided with the air conditioner, the process for inhibiting the drive of the air conditioner is not required. In this case, the air conditioner may include one that is driven by the engine 2 not only directly but also indirectly. For example, the engine may be structured to rotate the compressor for the air conditioner with the electric motor powered by battery as the power source.

(c) The engine 2 of the embodiment is provided with the addition valve 68 that serves to directly add the fuel into the exhaust gas as a reducing agent. Alternatively the fuel injection valve 58 is only provided for after injection so as to execute various catalytic control modes without the addition valve 68.

(d) The process is executed in S152 using the condition D1 where the vehicle is in the stable idle state. However, the condition D1 where the vehicle is in the idle state may be used.

(e) The low temperature combustion and the fuel addition/after injection are inhibited during the forced learning. In the case where the returned fuel by EGR gives greater influence to the fluctuation in the combustibility except deviation of the fuel injection amount rather than the amount of EGR, the fuel addition/after injection is only inhibited and the low temperature combustion is allowed.

(f) In the case where the EGR amount gives greater influence to the fluctuation in the combustibility except the deviation of the fuel injection amount rather than execution or non-execution of the fuel addition or the after injection, only the low temperature combustion is inhibited without inhibiting the fuel addition or the after injection.

## Claims

1. A method of detecting deterioration in amount of fuel injected from a fuel injection valve of an internal combustion engine on the basis of a correlation between a fuel injection amount command value and combusting performance of the internal combusting engine, in particular its speed (NE), the method being **characterized by** inhibiting an operation control for the internal combustion engine (S106 - S116, S120 - S128) which causes the correlation to fluctuate when the deterioration in the amount of the fuel is being detected.

2. An apparatus of detecting deterioration in a fuel injection amount in an internal combustion engine, comprising:
injection deterioration detection means for detecting deterioration in the amount of the fuel injected from a fuel injection valve (58) on the basis of a correlation between a fuel injection amount command value and combusting performance of the internal combusting engine, in particular its speed (NE); and **characterized by**
inhibition means (70) for inhibiting an operation control for the internal combustion engine (2) which causes the correlation to fluctuate when the deterioration in the amount of the fuel is being detected by the injection deterioration detection means.

3. The apparatus according to claim 2, **characterized in that** when the internal combustion engine (2) includes an exhaust gas recirculation mechanism that executes an exhaust gas recirculation control for adjusting an exhaust gas recirculation amount in accordance with an operation state of the internal combustion engine (2), the operation control for the internal combustion engine (2) to be inhibited by the inhibition means (70) comprises an operation control executed by the exhaust gas recirculation mechanism that recirculates unburned gas from an exhaust system of the internal combustion engine (2).

4. The apparatus according to claim 3, **characterized in that** when the internal combustion engine (2) includes recovery reclamation control means for executing one of addition of the fuel from a fuel addition valve (68) in the exhaust system and an after injection from a fuel injection valve (58) to an exhaust emission control catalyst (36, 38, 40) in the exhaust system of the internal combustion engine (2), the operation control for the internal combustion engine (2) in which the exhaust gas recirculation mechanism recirculates the unburned gas from the exhaust system of the internal combustion engine (2) comprises one of the addition of the fuel and the after injection upon exhaust gas recirculation.

5. The apparatus according to claim 3, **characterized in that** when the internal combustion engine (2) includes combustion mode control means for selectively executing a low temperature combustion and a normal combustion by adjusting an amount of the exhaust gas recirculation in accordance with the operation state of the internal combustion engine (2), the operation control for the internal combustion engine (2) in which the exhaust gas recirculation mechanism recirculates the unburned gas from the exhaust system of the internal combustion engine (2) comprises execution of the low temperature combustion by the combustion mode control means (70).

6. The apparatus according to claim 5, **characterized in that**
the inhibition means (70) sets a continuation permission time for inhibiting the low temperature combustion and releases the inhibition of the low temperature combustion upon an elapse of the continuation permission time, and
the injection deterioration detection means terminates detection of the deterioration in the fuel injection amount upon the elapse of the continuation permission time.

7. The apparatus according to claim 5, **characterized in that** the internal combustion engine (2) includes an air conditioner to be driven based on an output of the internal combustion engine (2), and the inhibition means inhibits both the low temperature combustion and drive of the air conditioner.

8. The apparatus according to claim 7, **characterized in that**
the inhibition means (70) sets a continuation permission time for inhibiting the low temperature combustion and releases the inhibition of the low temperature combustion and the drive of the air conditioner upon an elapse of the continuation permission time, and
the injection deterioration detection means terminates detection of the deterioration in the fuel injection amount upon the elapse of the continuation permission time.

9. The apparatus according to claim 6 or 8, **characterized in that** a frequency of inhibiting the low temperature combustion by the inhibition means (70) within the continuation permission time is limited to a reference number of time in the same continual time for operating the internal combustion engine (2).

10. The apparatus according to claim 9, **characterized in that** the injection deterioration detection means executes detection of deterioration in the fuel injection amount when the low temperature combustion is not performed by the combustion mode control means (70) after the inhibition means inhibits the low temperature combustion by the reference number of times.

11. The apparatus according to any one of claims 5 to 10, **characterized in that** the injection deterioration detection means executes detection of deterioration in the fuel injection amount only in one of an idle state and a stable idle state.

12. The apparatus according to claim 11, **characterized in that** the inhibition means (70) inhibits one of the low temperature combustion and both the low temperature combustion and the drive of the air conditioner at a timing when the operation state of the internal combustion engine (2) is changed from a non-idle state to the idle state or just before the timing.

13. The apparatus according to claim 11, **characterized in that** the inhibition means (70) inhibits one of the low temperature combustion and both the low temperature combustion and the drive of the air conditioner when a non-operation state of an accelerator pedal (72) continues for a reference time period.

14. The apparatus according to any one of claims 5 to 13, **characterized by** comprising recovery reclamation control means for one of adding the fuel from a fuel addition valve (68) in the exhaust system and executing an after injection from a fuel injection valve (58) to an exhaust emission control catalyst (36, 38, 40) provided in the exhaust system.

15. The apparatus according to claim 14, **characterized in that** the operation control for the internal combustion engine (2) comprises execution of the low temperature combustion by the combustion mode control means (70), and one of the adding of the fuel and the after injection upon the exhaust gas recirculation.

## Patentansprüche

1. Verfahren zur Erfassung einer Minderung der Kraftstoffmenge, die von einem Kraftstoffeinspritzventil eines Verbrennungsmotors eingespritzt wird, auf der Basis einer Korrelation zwischen einem Kraftstoffeinspritzmengen-Befehlswert und einer Verbrennungsleistung des Verbrennungsmotors, genauer dessen Drehzahl (NE), wobei das Verfahren **dadurch gekennzeichnet ist, dass** es eine Betriebssteuerung für den Verbrennungsmotor (S 106 - S116, S120 - S12) hemmt, die bewirkt, dass diese Korrelation schwankt, während die Minderung der Kraftstoffmenge erfasst wird.

2. Vorrichtung zur Erfassung der Minderung einer Kraftstoffmenge, die in einen Verbrennungsmotor eingespritzt wird, aufweisend:
ein Einspritzungsminderungs-Erfassungsmittel zum Erfassen einer Minderung der Kraftstoffmenge, die von einem Kraftstoffeinspritzventil (58) eingespritzt wird, auf der Basis einer Korrelation zwischen einem Kraftstoffeinspritzmengen-Befehlswert und einer Verbrennungsleistung des Verbrennungsmotors, genauer dessen Drehzahl (NE), und **gekennzeichnet durch**
ein Hemmmittel (70) zum Hemmen einer Betriebssteuerung für den Verbrennungsmotor (2), die bewirkt, dass die Korrelation schwankt, während eine Minderung der Kraftstoffmenge vom Einspritzungsminderungs-Erfassungsmittel erfasst wird.

3. Vorrichtung nach Anspruch 2, **dadurch gekennzeichnet, dass**, wenn der Verbrennungsmotor (2) einen Abgas-Rückführmechanismus aufweist, der eine Abgas-Rückführungssteuerung zum Einstellen einer Abgas-Rückführungsmenge gemäß einem Betriebszustand des Verbrennungsmotors (2) durchführt, die Betriebssteuerung für den Verbrennungsmotor (2), die vom Hemmmittel (70) gehemmt werden soll, eine Betriebssteuerung einschließt, die vom Abgas-Rückführmechanismus ausgeführt wird, der unverbranntes Gas von einem Abgassystem des Verbrennungsmotors (2) zurückführt.

4. Vorrichtung nach Anspruch 3, **dadurch gekennzeichnet, dass**, wenn der Verbrennungsmotor (2) ein Regenerierungsrückgewinnungs-Steuermittel für die Durchführung einer Kraftstoffzugabe von einem Kraftstoffzugabeventil (68) im Abgassystem und/oder eine Nacheinspritzung von einem Kraftstoffeinspritzventil (58) zu einem Abgasemissionsbegrenzungs-Katalysator (36, 38, 40) im Abgassystem des Verbrennungsmotors (2) einschließt, die Betriebssteuerung für den Verbrennungsmotor (2), in dem der Abgas-Rückführmechanismus das unverbrannte Gas vom Abgassystem des Verbrennungsmotors (2) zurückführt, die Kraftstoffzugabe und/oder die Nacheinspritzung bei Abgasrückführung umfasst.

5. Vorrichtung nach Anspruch 3, **dadurch gekennzeichnet, dass**, wenn der Verbrennungsmotor (2) ein Verbrennungsmodus-Steuermittel zur selektiven Durchführung einer Niedertemperaturverbrennung und einer normalen Verbrennung durch Einstellen einer Abgasrückführungsmenge gemäß dem Betriebszustand des Verbrennungsmotors (2) einschließt, die Betriebssteuerung für den Verbrennungsmotor (2), in der der Abgasrückführmechanismus das unverbrannte Gas vom Abgassystem des Verbrennungsmotors (2) zurückführt, die Durchführung der Niedertemperaturverbrennung durch das Verbrennungsmodus-Steuermittel (70) umfasst.

6. Vorrichtung nach Anspruch 5, **dadurch gekennzeichnet, dass**
das Hemmmittel (70) eine Fortsetzungserlaubniszeit für die Hemmung der Niedertemperaturverbrennung einstellt und die Hemmung der Niedertemperaturverbrennung aufhebt, sobald die Fortsetzungserlaubniszeit abgelaufen ist, und
das Einspritzungsminderungs-Erfassungsmittel die Erfassung der Minderung der Kraftstoffeinspritzmenge beendet, sobald die Fortsetzungserlaubniszeit abgelaufen ist.

7. Vorrichtung nach Anspruch 5, **dadurch gekennzeichnet, dass** der Verbrennungsmotor (2) eine Klimaanlage aufweist, die auf der Basis einer Ausgangsleistung des Verbrennungsmotors (2) angesteuert wird, und das Hemmmittel sowohl die Niedertemperaturverbrennung als auch die Ansteuerung der Klimaanlage hemmt.

8. Vorrichtung nach Anspruch 7, **dadurch gekennzeichnet, dass**
das Hemmmittel (70) eine Fortsetzungserlaubniszeit für die Hemmung der Niedertemperaturverbrennung einstellt und die Hemmung der Niedertemperaturverbrennung und die Ansteuerung der Klimaanlage aufhebt, sobald die Fortsetzungserlaubniszeit abgelaufen ist, und
das Einspritzungsminderungs-Erfassungsmittel die Erfassung der Minderung der Kraftstoffeinspritzmenge beendet, sobald die Fortsetzungserlaubniszeit abgelaufen ist.

9. Vorrichtung nach Anspruch 6 oder 8, **dadurch gekennzeichnet, dass** eine Häufigkeit der Hemmung der Niedertemperaturverbrennung durch das Hemmmittel (70) innerhalb der Fortsetzungserlaubniszeit auf eine vorgegebene Häufigkeit im gleichen zusammenhängenden Zeitraum, in dem der Verbrennungsmotors (2) betrieben wird, begrenzt ist.

10. Vorrichtung nach Anspruch 9, **dadurch gekennzeichnet, dass** das Einspritzungsminderungs-Erfassungsmittel eine Erfassung der Minderung der Kraftstoffeinspritzmenge durchführt, wenn vom Verbrennungsmodus-Steuermittel (70) keine Niedertemperaturverbrennung durchgerührt wird, nachdem das Hemmmittel die Niedertemperaturverbrennung so oft wie vorgegeben durchgeführt hat.

11. Vorrichtung nach einem der Ansprüche 5 bis 10, **dadurch gekennzeichnet, dass** das Einspritzungsminderungs-Erfassungsmittel eine Erfassung der Minderung der Kraftstoffeinspritzmenge nur entweder in einem Leerlaufzustand oder in einem stabilen Leerlaufzustand durchführt.

12. Vorrichtung nach Anspruch 11, **dadurch gekennzeichnet, dass** das Hemmmittel (70) nur die Niedertemperaturverbrennung oder sowohl die Niedertemperaturverbrennung als auch die Ansteuerung der Klimaanlage zu einer Zeit, während der der Betriebszustand des Verbrennungsmotors (2) von einem Nicht-Leerlaufzustand in den Leerlaufzustand geändert wird, oder unmittelbar vor dieser Zeit hemmt.

13. Vorrichtung nach Anspruch 11, **dadurch gekennzeichnet, dass** das Hemmmittel (70) nur die Niedertemperaturverbrennung oder sowohl die Niedertemperaturverbrennung als auch die Ansteuerung der Klimaanlage hemmt, wenn ein Nicht-Betätigungszustand eines Gaspedals (72) für eine vorgegebene Zeit anhält.

14. Vorrichtung nach einem der Ansprüche 5 bis 13, **dadurch gekennzeichnet, dass** sie ein Regenerierungsrückgewinnungs-Steuermittel für die Kraftstoffzugabe von einem Kraftstoffzugabeventil (69) im Abgassystem und/oder die Durchführung einer Nacheinspritzung von einem Kraftstoffeinspritzventil (58) zu einem Abgasemissionsbegrenzungs-Katalysator (36, 38, 40), der im Abgassystem vorgesehen ist, einschließt.

15. Vorrichtung nach Anspruch 14, **dadurch gekennzeichnet, dass** die Betriebssteuerung für den Verbrennungsmotor (2) die Durchführung der Niedertemperaturverbrennung durch das Verbrennungsmodus-Steuermittel (70) und entweder die Kraftstoffzugabe oder die Nacheinspritzung bei der Abgasrückführung umfasst.

## Revendications

1. Procédé de détection de la détérioration d'une quantité de carburant injectée à partir d'une soupape d'injection de carburant d'un moteur à combustion interne sur la base d'une corrélation entre une valeur de commande de quantité d'injection de carburant et les performances de combustion du moteur à combustion interne, en particulier sa vitesse (NE), le procédé étant **caractérisé par** l'interdiction d'une commande de fonctionnement pour le moteur à combustion interne (S106 - S116, S120 - S128) qui entraîne une fluctuation de la corrélation lorsque la détérioration de la quantité du carburant est détectée.

2. Appareil de détection de la détérioration d'une quantité d'injection de carburant dans un moteur à combustion interne, comprenant :
des moyens de détection de détérioration d'injection pour détecter la détérioration de la quantité du carburant injecté à partir d'une soupape d'injection de carburant (58) sur la base d'une corrélation entre une valeur de commande de quantité d'injection de carburant et les performances de combustion du moteur à combustion interne, en particulier sa vitesse (NE) ; et **caractérisé par**
des moyens d'interdiction (70) pour interdire une commande de fonctionnement pour le moteur à combustion interne (2) qui entraîne une fluctuation de la corrélation lorsque la détérioration de la quantité du carburant est détectée par les moyens de détection de détérioration d'injection.

3. Appareil selon la revendication 2, **caractérisé en ce que**, lorsque le moteur à combustion interne (2) comprend un mécanisme de recirculation des gaz d'échappement qui exécute une commande de recirculation des gaz d'échappement pour ajuster une quantité de recirculation des gaz d'échappement en fonction d'un état de fonctionnement du moteur à combustion interne (2), la commande de fonctionnement pour le moteur à combustion interne (2) devant être interdite par les moyens d'interdiction (70) comprend une commande de fonctionnement exécutée par le mécanisme de recirculation des gaz d'échappement qui fait recirculer les gaz non brûlés provenant d'un système d'échappement du moteur à combustion interne (2).

4. Appareil selon la revendication 3, **caractérisé en ce que**, lorsque le moteur à combustion interne (2) comprend des moyens de commande de réutilisation de récupération pour exécuter l'un d'un ajout du carburant à partir d'une soupape d'ajout de carburant (68) dans le système d'échappement et d'une injection subséquente à partir d'une soupape d'injection de carburant (58) à un catalyseur de contrôle d'émission d'échappement (36, 38, 40) dans le système d'échappement du moteur à combustion interne (2), la commande de fonctionnement pour le moteur à combustion interne (2) dans laquelle le mécanisme de recirculation des gaz d'échappement fait recirculer les gaz non brûlés provenant du système d'échappement du moteur à combustion interne (2) comprend l'un de l'ajout du carburant et de l'injection subséquente lors de la recirculation des gaz d'échappement.

5. Appareil selon la revendication 3, **caractérisé en ce que**, lorsque le moteur à combustion interne (2) comprend des moyens de commande de mode de combustion pour exécuter de manière sélective une combustion à basse température et une combustion normale en ajustant une quantité de la recirculation des gaz d'échappement en fonction de l'état de fonctionnement du moteur à combustion interne (2), la commande de fonctionnement pour le moteur à combustion interne (2) dans laquelle le mécanisme de recirculation des gaz d'échappement fait recirculer les gaz non brûlés provenant du système d'échappement du moteur à combustion interne (2) comprend l'exécution de la combustion à basse température par les moyens de commande de mode de combustion (70).

6. Appareil selon la revendication 5, **caractérisé en ce que**
les moyens d'interdiction (70) fixent un temps d'autorisation de continuation pour interdire la combustion à basse température et libèrent l'interdiction de la combustion à basse température à la fin du temps d'autorisation de continuation, et
les moyens de détection de détérioration d'injection terminent la détection de la détérioration de la quantité d'injection de carburant à la fin du temps d'autorisation de continuation.

7. Appareil selon la revendication 5, **caractérisé en ce que** le moteur à combustion interne (2) comprend un climatiseur devant être commandé sur la base d'une sortie du moteur à combustion interne (2), et les moyens d'interdiction interdisent à la fois la combustion à basse température et la commande du climatiseur.

8. Appareil selon la revendication 7, **caractérisé en ce que**
les moyens d'interdiction (70) fixent un temps d'autorisation de continuation pour interdire la combustion à basse température et relâchent l'interdiction de la combustion à basse température et de la commande du climatiseur à la fin du temps d'autorisation de continuation, et
les moyens de détection de détérioration d'injection terminent la détection de la détérioration de la quantité d'injection de carburant à la fin du temps d'autorisation de continuation.

9. Appareil selon la revendication 6 ou 8, **caractérisé en ce qu'**une fréquence d'interdiction de la combustion à basse température par les moyens d'interdiction (70) dans le temps d'autorisation de continuation est limitée à un nombre de fois de référence dans le même temps continu pour faire fonctionner le moteur à combustion interne (2).

10. Appareil selon la revendication 9, **caractérisé en ce que** les moyens de détection de détérioration d'injection exécutent la détection de la détérioration de la quantité d'injection de carburant lorsque la combustion à basse température n'est pas effectuée par les moyens de commande de mode de combustion (70) après que les moyens d'interdiction aient interdit la combustion à basse température le nombre de fois de référence.

11. Appareil selon l'une quelconque des revendications 5 à 10, **caractérisé en ce que** les moyens de détection de détérioration d'injection exécutent la détection de la détérioration de la quantité d'injection de carburant uniquement dans l'un d'un état de ralenti et d'un état de ralenti stable.

12. Appareil selon la revendication 11, **caractérisé en ce que** les moyens d'interdiction (70) interdisent l'une de la combustion à basse température et de la combustion à basse température et de la commande du climatiseur à la fois à un instant auquel l'état de fonctionnement du moteur à combustion interne (2) passe d'un état de non ralenti à l'état de ralenti ou juste avant l'instant.

13. Appareil selon la revendication 11, **caractérisé en ce que** les moyens d'interdiction (70) interdisent l'une de la combustion à basse température et de la combustion à basse température et de la commande du climatiseur à la fois lorsqu'un état de non actionnement d'une pédale d'accélérateur (72) se poursuit pendant une période de temps de référence.

14. Appareil selon l'une quelconque des revendications 5 à 13, **caractérisé en ce qu'**il comprend des moyens de commande de réutilisation de récupération pour l'un de l'ajout du carburant à partir d'une soupape d'ajout de carburant (68) dans le système d'échappement et de l'exécution d'une injection subséquente à partir d'une soupape d'injection de carburant (58) à un catalyseur de contrôle d'émission d'échappement (36, 38, 40) prévu dans le système d'échappement.

15. Appareil selon la revendication 14, **caractérisé en ce que** la commande de fonctionnement pour le moteur à combustion interne (2) comprend l'exécution de la combustion à basse température par les moyens de commande de mode de combustion (70), et l'un de l'ajout du carburant et de l'injection subséquente lors de la recirculation des gaz d'échappement.
